# EUROPÄISCHE PATENTSCHRIFT

(11) **EP 4 291 456 B1**
(45) Veröffentlichungstag und Bekanntmachung des Hinweises auf die Patenterteilung: **29.10.2025**
(21) Anmeldenummer: 22702728.1
(22) Anmeldetag: 31.01.2022
(51) Int. Cl.: B60W 30/18, B60W 30/184

(54) **VERFAHREN ZUR STEUERUNG EINES FAHRTRICHTUNGSWECHSELS EINES ARBEITSFAHRZEUGS ZWISCHEN VORWÄRTSFAHRT UND RÜCKWÄRTSFAHRT ODER UMGEKEHRT**
METHOD FOR CONTROLLING A CHANGE IN THE DIRECTION OF TRAVEL OF A WORKING VEHICLE BETWEEN FORWARD TRAVEL AND REARWARD TRAVEL OR VICE VERSA
PROCÉDÉ DE COMMANDE D'UN CHANGEMENT DE DIRECTION DE DÉPLACEMENT D'UN VÉHICULE DE TRAVAIL ENTRE UN DÉPLACEMENT VERS L'AVANT ET UN DÉPLACEMENT VERS L'ARRIÈRE OU VICE-VERSA

(30) Priorität: 09.02.2021 DE 102021102940; 01.10.2021 DE 102021125481
(43) Veröffentlichungstag der Anmeldung: 20.12.2023
(73) Patentinhaber: ZF CV Systems Global GmbH, 3006 Bern (CH)
(72) Erfinder: BRÜTT, Mirko, 31832 Springe (DE); HAVERKAMP, Michael, 30455 Hannover (DE); SPREMBERG, Jan, 30974 Wennigsen (DE)
(74) Vertreter: ZF Friedrichshafen AG
(86) Internationale Anmeldenummer: PCT/EP2022/052204
(87) Internationale Veröffentlichungsnummer: WO 2022/171475

(56) Entgegenhaltungen:
- EP-A1- 3 315 370
- WO-A1-2013/053563
- DE-A1- 10 250 730
- DE-A1- 19 941 876
- US-A1- 2014 080 667

## Beschreibung

Die Erfindung betrifft ein Verfahren zur Steuerung eines Fahrtrichtungswechsels eines Arbeitsfahrzeugs zwischen Vorwärtsfahrt und Rückwärtsfahrt oder umgekehrt, wobei das Arbeitsfahrzeug einen elektronisch steuerbaren hydrostatischen Fahrantrieb, eine fremdkraftbetätigte Bremsanlage mit mindestens einem elektronisch steuerbaren Bremskreis und ein elektronisches Bremssteuergerät zur Steuerung des Fahrantriebs sowie des mindestens einen elektronisch steuerbaren Bremskreises der Bremsanlage aufweist, und bei dem während einer Fahrt in eine erste Fahrtrichtung ein Fahrtrichtungswechsel in die dazu entgegengesetzte Fahrtrichtung durch eine Umschaltung des hydrostatischen Fahrantriebs mittels eines zugeordneten manuellen Bedienungselementes ausgelöst wird.

Ein hydrostatischer Fahrantrieb eines Arbeitsfahrzeugs, bei dem es sich zum Beispiel um einen Radlader, einen Traktor oder einen Gabelstapler handeln kann, weist einen hydrostatische Antriebsstrang mit mindestens einer Hydrostatpumpe und einem Hydrostatmotor auf, welche in einem geschlossenen oder offenen fluidischen Kreislauf miteinander verbunden sein können. Zumindest die Hydrostatpumpe ist derart verstellbar, dass deren Fördervolumen variabel steuerbar ist. Der hydrostatische Fahrantrieb kann alleine aus dem hydrostatischen Antriebsstrang bestehen (DE 101 45 996 A1) oder beispielsweise aus einem Leistungsverzweigungsgetriebe mit einem hydrostatischen Antriebsstrang und einem dazu parallelen mechanischen Antriebsstrang gebildet sein (DE 101 22 823 B4). EP 3 315 370 A1 offenbart einen Traktor, der mit einer Reversiervorrichtung ausgestattet ist, die in der Lage ist, die Fahrtrichtung oder Bewegungsrichtung des Traktors automatisch umzukehren.

Vorliegend wird davon ausgegangen, dass eine Fahrtrichtungsänderung, welche durch eine Umschaltung der zu dem Hydrostatmotor geführten Hochdruckleitungen und Niederdruckleitungen bewirkt wird, bei einem geschlossenen Kreislauf durch eine entsprechende Umsteuerung der Hydrostatpumpe oder bei einem offenen Kreislauf durch eine Umschaltung eines zwischen der Hydrostatpumpe und dem Hydrostatmotor angeordneten Umschaltventils erfolgt.

Bei einem Arbeitsfahrzeug mit einem derartigen hydrostatischen Fahrantrieb sowie einer an der Fahrzeugvorderseite angeordneten Ladeschaufel oder Ladegabel kann ein Fahrtrichtungswechsel schon während der Fahrt durch eine entsprechende Umschaltung eines Bedienungselementes, wie eines Fahrtrichtungshebels oder eines Fahrtrichtungsschalters, in die jeweils entgegengesetzte Fahrtrichtung ausgelöst werden. Dies kann beispielsweise in folgenden Situationen erfolgen: Bei der Aufnahme von Ladegut an einer Ladeposition von Vorwärtsfahrt hin zu Rückwärtsfahrt, an einer Wendeposition mit aufgenommenen Ladegut zum Wechsel von Rückwärtsfahrt zu Vorwärtsfahrt, und an einer Entladeposition zum Entladen des zuvor aufgenommenen Ladeguts von Vorwärtsfahrt zu Rückwärtsfahrt.

Der Fahrer eines Arbeitsfahrzeugs muss beim Verladen von Ladegut mehrere Aufgaben erfüllen, zum Beispiel das Lenken des Fahrzeugs, wechselweise ein Fahrpedal und ein Bremspedal betätigen, bei der Ladungsaufnahme und dem Entladen die Hebel zum Anheben und Absenken sowie Kippen der Ladeschaufel oder Ladegabel bedienen, sowie die Umgebung beobachten, um Kollisionen mit anderen Fahrzeugen, Personen und mit stationären Hindernissen zu vermeiden. Mit der Umschaltung des Bedienungselementes in die entgegengesetzte Fahrtrichtung schon während der Fahrt wird zunächst das Fördervolumen der Hydrostatpumpe kontinuierlich bis auf den Wert Null reduziert und dann mit entgegengesetzter Förderrichtung oder mit umgeschaltetem Umschaltventil wieder erhöht. Wenn der Fahrer dabei die Verzögerung des Arbeitsfahrzeugs nicht durch das Loslassen des Fahrpedals und die Betätigung des Bremspedals aktiv unterstützt, sondern den Fuß weiter auf dem Fahrpedal belässt, erfolgt die Verzögerung des Arbeitsfahrzeugs alleine über den hydrostatischen Antriebsstrang, welches mit einer nachteilig hohen mechanischen Belastung der betreffenden Bauteile verbunden ist. Diese Belastung ist im beladenen Zustand aufgrund der dann höheren Fahrzeugmasse naturgemäß höher als im entladenen Zustand des Arbeitsfahrzeugs.

Der vorliegenden Erfindung liegt daher die Aufgabe zugrunde, ein Verfahren zur Steuerung eines Fahrtrichtungswechsels eines gattungsgemäßen Arbeitsfahrzeugs zwischen Vorwärtsfahrt und Rückwärtsfahrt oder umgekehrt vorzustellen, durch dessen Nutzung die mechanische Belastung der Bauteile des hydrostatischen Antriebsstrangs bei der beschriebenen Betriebsweise reduziert werden kann.

Diese Aufgabe ist durch ein Verfahren gelöst, welches die Merkmale des Anspruchs 1 aufweist. Vorteilhafte Weiterbildungen dieses Verfahrens sind in den abhängigen Ansprüchen definiert.

Demnach betrifft die Erfindung ein Verfahren zur Steuerung eines Fahrtrichtungswechsels eines Arbeitsfahrzeugs zwischen Vorwärtsfahrt und Rückwärtsfahrt oder umgekehrt, wobei das Arbeitsfahrzeug einen elektronisch steuerbaren hydrostatischen Fahrantrieb, eine fremdkraftbetätigte Bremsanlage mit mindestens einem elektronisch steuerbaren Bremskreis und ein elektronisches Bremssteuergerät zur Steuerung des Fahrantriebs sowie des mindestens einen elektronisch steuerbaren Bremskreises der Bremsanlage aufweist, und bei dem während einer Fahrt in eine erste Fahrtrichtung ein Fahrtrichtungswechsel in die dazu entgegengesetzte Fahrtrichtung durch eine Umschaltung des hydrostatischen Fahrantriebs mittels eines zugeordneten manuellen Bedienungselementes ausgelöst wird.

Zur Lösung der gestellten Aufgabe ist bei diesem Verfahren vorgesehen, dass bei der Durchführung des Fahrtrichtungswechsels von Vorwärtsfahrt zu Rückwärtsfahrt oder umgekehrt die Verzögerung des Arbeitsfahrzeugs durch eine automatische Betätigung der Bremsen des elektronisch steuerbaren Bremskreises der Bremsanlage unterstützt wird, wobei diese Bremsen ausgelöst durch die Umschaltung des manuellen Bedienungselementes betätigt und spätestens mit Erreichen des Fahrzeugstillstands wieder gelöst werden.

Die Erfindung geht demnach aus von einem an sich bekannten Arbeitsfahrzeug, wie zum Beispiel einem Radlader, einem Traktor oder einem Gabelstapler, welches einen elektronisch steuerbaren hydrostatischen Fahrantrieb, eine fremdkraftbetätigte Bremsanlage mit mindestens einem elektronisch steuerbaren Bremskreis sowie ein elektronisches Bremssteuergerät zur Ansteuerung des Fahrantriebs und des elektronisch steuerbaren Bremskreises der Bremsanlage aufweist.

Wenn der Fahrer dieses Fahrzeugs während einer Vorwärtsfahrt oder Rückwärtsfahrt das genannte manuelle Bedienungselement umschaltet, um einen Fahrtrichtungswechsel in die entgegengesetzte Fahrtrichtung auszulösen, wird in dem hydrostatischen Antriebsstrang zunächst das Fördervolumen der Hydrostatpumpe kontinuierlich bis auf den Wert Null reduziert und dann mit entgegengesetzter Förderrichtung oder mit umgeschaltetem Umschaltventil wieder erhöht. Wenn der Fahrer die Verzögerung der Arbeitsmaschine nicht durch die Betätigung des Bremspedals aktiv unterstützt, kommt es dabei in den Bauteilen des hydrostatischen Antriebsstrangs zu einer unerwünscht hohen mechanischen Belastung.

Durch die automatische Abbremsung des Arbeitsfahrzeugs mit den Bremsen des elektronisch steuerbaren Bremskreises der Bremsanlage wird der hydrostatische Antriebsstrang bei der Abbremsung des Arbeitsfahrzeugs unterstützt und entlastet, sodass die mechanische Belastung der betreffenden Bauteile reduziert und die schadlose Gebrauchsdauer des hydrostatischen Antriebsstrangs erhöht wird. Der elektronisch steuerbare Bremskreis der Bremsanlage kann dabei beispielsweise die Bremsaktuatoren an der Vorderachse, an der Hinterachse oder an beiden Fahrzeugachsen betätigen.

Zur Dosierung des in die Bremszylinder des elektronisch steuerbaren Bremskreises eingesteuerten Bremsdruckes p_{B} ist erfindungsgemäß vorgesehen, dass die Fahrgeschwindigkeit des Arbeitsfahrzeugs sowie mindestens ein die mechanische Belastung des hydrostatischen Antriebsstrangs kennzeichnender Betriebsparameter sensorisch erfasst und deren Werte an das zugeordnete Steuergerät übertragen werden, und dass der in die Bremszylinder des elektronisch steuerbaren Bremskreises einzusteuernde Bremsdruck p_{B} in diesem Steuergerät in Abhängigkeit von der Fahrgeschwindigkeit v_{F} des Arbeitsfahrzeugs sowie von dem Wert des mindestens einen die mechanische Belastung des hydrostatischen Antriebsstrangs kennzeichnenden Betriebsparameters bestimmt wird.

Als Betriebsparameter, die kennzeichnend für die mechanische Belastung des hydrostatischen Antriebsstrangs sind, können beispielsweise das Eingangsdrehmoment M_{HA_E}, das Ausgangsdrehmoment M_{HA_A} und die Übersetzung i_{HA} des hydrostatischen Antriebsstrangs sowie der Arbeitsdruck p_{A} in einer Hochdruckleitung des hydrostatischen Antriebsstrangs genutzt werden.

Da eine zusätzliche Abbremsung des Arbeitsfahrzeugs mittels den Bremsen des elektronisch steuerbaren Bremskreises nur bei höherer Fahrgeschwindigkeit v_{F} sinnvoll ist, kann vorgesehen sein, dass die Bremsen des elektronisch steuerbaren Bremskreises nur dann betätigt werden, wenn die Fahrgeschwindigkeit v_{F} des Arbeitsfahrzeugs zum Zeitpunkt der Umschaltung des manuellen Bedienungselementes eine vorab festgelegte Mindestfahrgeschwindigkeit v_{F_min} erreicht hat oder überschreitet | v_{F} | ≥ V_{F_min}. Diese Mindestfahrgeschwindigkeit v_{F_min} kann beispielsweise auf einen Wert von 5 km/h festgelegt sein (v_{F_min} = 5 km/h).

Auch kann das vorzeitige Lösen der Bremsen vor Erreichen des Fahrzeugstillstands (Fahrgeschwindigkeit v_{F} = 0) sinnvoll sein, weil das Lösen der Bremsen nach der Drucklosschaltung der zugeordneten Bremszylinder üblicherweise mit einer gewissen zeitlichen Verzögerung erfolgt. Um eine Behinderung der anschließenden Beschleunigung des Arbeitsfahrzeugs durch die dann noch greifenden Bremsen zu vermeiden, kann daher vorgesehen sein, dass die Bremsen des elektronisch steuerbaren Bremskreises schon vor Erreichen des Fahrzeugstillstands (v_{F} = 0) gelöst werden, wenn die Fahrgeschwindigkeit v_{F} des Arbeitsfahrzeugs eine minimale Fahrgeschwindigkeit v_{F_min*} nahe dem Wert Null erreicht oder unterschritten hat (| v_{F} | ≤ v_{F_min*}). Diese minimale Fahrgeschwindigkeit v_{F_min*} kann beispielsweise auf einen Wert von 0,5 km/h festgelegt sein (v_{F_min*} = 0,5 km/h).

Die Bremsen des elektronisch steuerbaren Bremskreises werden bevorzugt auch dann gelöst, sobald die Betätigung eines Fußbremsventils registriert wird, wobei der in die betreffenden Bremszylinder bereits eingesteuerte Bremsdruck p_{B} in einem stetigen Verlauf in den über das Fußbremsventil eingesteuerten oder mittels eines am Fußbremsventil angeordneten Bremswertgebers oder Stellwegsensors bestimmten Bremsdruck überführt wird.

Die Höhe des in die Bremszylinder des elektronisch steuerbaren Bremskreises eingesteuerten Bremsdruckes p_{B} wird beispielsweise proportional zu der zum Zeitpunkt der Umschaltung des Bedienungselementes vorliegenden Fahrgeschwindigkeit v_{F} des Arbeitsfahrzeugs bestimmt, da die Belastung der Bauteile des hydrostatischen Antriebsstrangs beim Abbremsen des Arbeitsfahrzeugs mit der Höhe der Fahrgeschwindigkeit v_{F} ansteigt.

Zusätzlich oder alternativ dazu kann die Höhe des in die Bremszylinder des elektronisch steuerbaren Bremskreises eingesteuerten Bremsdruckes p_{B} auch proportional zu dem zum Zeitpunkt der Umschaltung des Bedienungselementes vorliegenden Eingangsdrehmoment M_{HA_E}, dem Arbeitsdruck p_{A} in der Hochdruckleitung und dem Ausgangsdrehmoment M_{HA_A} oder der Übersetzung i_{HA} des hydrostatischen Antriebsstrangs bestimmt werden, die kennzeichnend für die Belastung der Bauteile des hydrostatischen Antriebsstrangs sind.

Der nach der Umschaltung des Bedienungselementes in die Bremszylinder des elektronisch steuerbaren Bremskreises eingesteuerte Bremsdruck p_{B} kann bis zum Lösen der Bremsen konstant gehalten werden.

Möglich ist es aber auch, dass der nach der Umschaltung des Bedienungselementes in die Bremszylinder des elektronisch steuerbaren Bremskreises eingesteuerte Bremsdruck p_{B} bis zum Lösen der Bremsen kontinuierlich, beispielsweise proportional zur abnehmenden Fahrgeschwindigkeit v_{F}, abgesenkt wird.

Eine weitere Möglichkeit besteht darin, dass der nach der Umschaltung des Bedienungselementes in die Bremszylinder des elektronisch steuerbaren Bremskreises eingesteuerte Bremsdruck p_{B} derart geregelt wird, dass eine vorgegebene Bremsverzögerung a_{F_soll} eingehalten wird.

Abhängig vom Aufbau der Bremsanlage des Arbeitsfahrzeugs kann der Bremsdruck in den Bremszylindern des elektronisch steuerbaren Bremskreises auf unterschiedliche Weise eingestellt werden. So kann der Bremsdruck p_{B} in den Bremszylindern des elektronisch steuerbaren Bremskreises mittels eines elektronisch ansteuerbaren Proportionalventils eingestellt werden, an welches eingangsseitig eine druckführende Vorratsleitung und ausgangsseitig eine zu den Bremszylindern führende Hauptbremsleitung angeschlossen ist.

Alternativ dazu kann vorgesehen sein, dass der Bremsdruck p_{B} in den Bremszylindern der Bremsen des elektronisch steuerbaren Bremskreises an jeder Fahrzeugseite mittels einer ABS-Steuereinheit eingestellt wird. Die ABS-Steuereinheiten weisen Einlassventile und Auslassventile auf und sind Bestandteile eines an sich bekannten Antiblockiersystems. Eine ABS-Steuereinheit ermöglicht in an sich bekannter Weise die Durchführung eines Anti-Blockier-Verfahrens an den Fahrzeugrädern. An die beiden ABS-Steuereinheiten ist eingangsseitig jeweils ein von einer als Hauptbremsleitung dienenden Achsbremsleitung abzweigender Abschnitt einer vorderen Achsbremsleitung angeschlossen. Ausgangsseitig ist an die beiden ABS-Steuereinheiten jeweils ein zu einem Bremszylinder der zugeordneten Bremse führender Abschnitt der vorderen Achsbremsleitung angeschlossen.

In bestimmten Fällen ist auch der Betrieb von Fahrzeuggespannen, die aus einem Zugfahrzeug und einem angehängten Anhängerfahrzeug bestehen, mit häufigen Fahrtrichtungswechseln verbunden. Beispielsweise muss ein Traktor mit einer angehängten einachsigen Feldspritze am Ende eines Feldes mit zwei Fahrtrichtungswechseln wenden, wenn das Verlassen des Feldes für das Wendemanöver zum Beispiel aufgrund von Busch- oder Baumbewuchs nicht möglich ist.

Um dabei ein Einknicken des Fahrzeuggespanns um eine Anhängerkupplung zu vermeiden, kann vorgesehen sein, dass bei einem aus einem Zugfahrzeug und einem Anhängerfahrzeug bestehenden Fahrzeuggespann nur die Bremsen mindestens eines elektronisch steuerbaren Bremskreises der Bremsanlage des in Fahrtrichtung gesehen hinteren Teilfahrzeugs betätigt werden. Demnach wird bei einer zu Ende gehenden Vorwärtsfahrt nur das Anhängerfahrzeug und bei einer zu Ende gehenden Rückwärtsfahrt nur das Zugfahrzeug abgebremst.

Alternativ dazu kann zu demselben Zweck vorgesehen sein, dass bei einem aus einem Zugfahrzeug und einem Anhängerfahrzeug bestehenden Fahrzeuggespann die Bremsen mindestens eines elektronisch steuerbaren Bremskreises der Bremsanlage des in der gerade anstehenden Fahrtrichtung hinteren Teilfahrzeugs stärker betätigt werden als die Bremsen mindestens eines elektronisch steuerbaren Bremskreises der Bremsanlage des in Fahrtrichtung vorderen Teilfahrzeugs. Demnach wird also bei Vorwärtsfahrt das Anhängerfahrzeug stärker als das Zugfahrzeug abgebremst wird, und bei Rückwärtsfahrt wird das Zugfahrzeug stärker als das Anhängerfahrzeug abgebremst.

Schließlich kann vorgesehen sein, dass nach der Betätigung des manuellen Bedienungselementes zur Unterstützung der Verzögerung des Arbeitsfahrzeugs oder des Zugfahrzeugs oder des Anhängerfahrzeugs die Bremsen an der Vorderachse oder an der Hinterachse und/oder an der Vorderachse und an der Hinterachse dieses Fahrzeugs elektronisch gesteuert betätigt werden. Demnach können in Abhängigkeit davon, wie das Fahrzeug aufgebaut ist und/oder betrieben wird, die Räder der für die Aufgabenlösung und den sonstigen Betrieb des Fahrzeugs jeweils optimalen Fahrzeugachse abgebremst werden.

Die Erfindung wird nachstehend anhand eines in der beigefügten Zeichnung dargestellten Ausführungsbeispiels näher erläutert. In der Zeichnung zeigt
Fig. 1 ein Blick von oben auf einen Ladeplatz, auf dem ein Arbeitsfahrzeug ein Anhängerfahrzeug eines Zugfahrzeugs mit einem Ladegut belädt, wobei das Verfahren gemäß der Erfindung zur Steuerung eines Fahrtrichtungswechsels des Arbeitsfahrzeugs von Vorwärtsfahrt zu Rückwärtsfahrt und umgekehrt zur Anwendung gelangt,
Fig. 2a den Schaltzustand eines manuellen Bedienungselementes des Arbeitsfahrzeugs bei dem in Fig. 1 dargestellten Fahrszenario in einem Zeitdiagramm,
Fig. 2b die Fahrgeschwindigkeit und die Fahrtrichtung des Arbeitsfahrzeugs bei dem in Fig. 1 dargestellten Fahrszenario in einem weiteren Zeitdiagramm,
Fig. 3 die Steuerung der Bremsvorgänge in dem Fahrszenario gemäß den Figuren 1, 2a und 2b in einem Funktionsschema, und
Fig. 4 eine Bremsanlage eines Arbeitsfahrzeugs zur Anwendung des Verfahrens gemäß den Figuren 1 bis 3 in einer schematischen Abbildung.

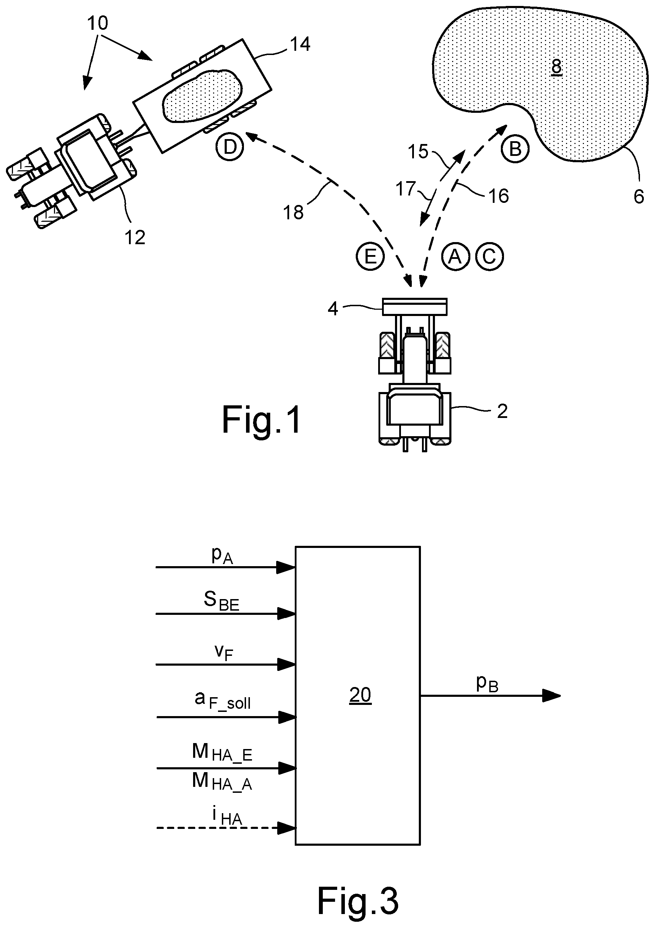

Das Verfahren gemäß der Erfindung dient zur Steuerung eines Fahrtrichtungswechsels von Vorwärtsfahrt zu Rückwärtsfahrt oder umgekehrt bei einem Arbeitsfahrzeug 2, welches einen elektronisch steuerbaren hydrostatischen Fahrantrieb 3, eine fremdkraftbetätigte Bremsanlage 22 mit mindestens einem elektronisch steuerbaren Bremskreis 106 sowie ein elektronisches Bremssteuergerät 40 zur Ansteuerung des Fahrantriebs 3 und des elektronisch steuerbaren Bremskreises 106 der Bremsanlage 22 aufweist. Dieses Verfahren wird nachfolgend beispielhaft anhand eines Fahrszenarios erläutert, welches in einer Draufsicht in der Fig. 1 abgebildet ist.

Ein Arbeitsfahrzeug 2, bei dem es sich vorliegend um einen mit einer Frontladerschaufel 4 versehenen Traktor handelt, soll lockeres Ladegut 8 von einem größeren Haufen 6 aufnehmen und auf der Ladefläche eines Anhängerfahrzeugs 14 eines Fahrzeuggespanns 10 abladen. Bei dem Ladegut 8 handelt es sich in diesem Beispiel um Sand, Getreide oder Silage. Das Fahrzeuggespann 10 besteht aus einem weiteren Traktor 12 und dem an diesem angehängten Anhängerfahrzeug 14.

Um diesen Ladevorgang auszuführen fährt das Arbeitsfahrzeug 2 von einer Ausgangsposition A auf einem ersten Fahrweg 16 vorwärts die Ladeposition B an, an der sich der Haufen 6 mit dem Ladegut 8 befindet, um mit der Frontladerschaufel 4 Ladegut 8 aufzunehmen. Anschließend fährt das Arbeitsfahrzeug 2 in etwa entlang des ersten Fahrweges 16 rückwärts zu der nahe der Ausgangsposition A liegenden ersten Wendeposition C. Von der ersten Wendeposition C aus fährt das Arbeitsfahrzeug 2 auf einem zweiten Fahrweg 18 vorwärts bis zu einer Entladeposition D, welche sich unmittelbar neben dem Anhängerfahrzeug 14 befindet. Dort angekommen kippt die Frontladerschaufel 4 das in ihr aufgenommene Ladegut 8 auf die Ladefläche des Anhängerfahrzeugs 14. Danach fährt das Arbeitsfahrzeug 2 in etwa entlang des zweiten Fahrweges 18 rückwärts zu einer zweiten Wendeposition E, welche dicht bei der Ausgangsposition A und der ersten Wendeposition C liegt. Dieser Fahrzyklus wird mehrfach so lange wiederholt, bis das Anhängerfahrzeug 14 ausreichend mit dem Ladegut 8 beladen ist.

Erkennbar finden an der Ladeposition B und der Entladeposition D jeweils Fahrtrichtungswechsel von Vorwärtsfahrt hin zu Rückwärtsfahrt statt, während an den beiden Wendepositionen C, E jeweils ein Fahrtrichtungswechsel von Rückwärtsfahrt hin zu Vorwärtsfahrt erfolgt.

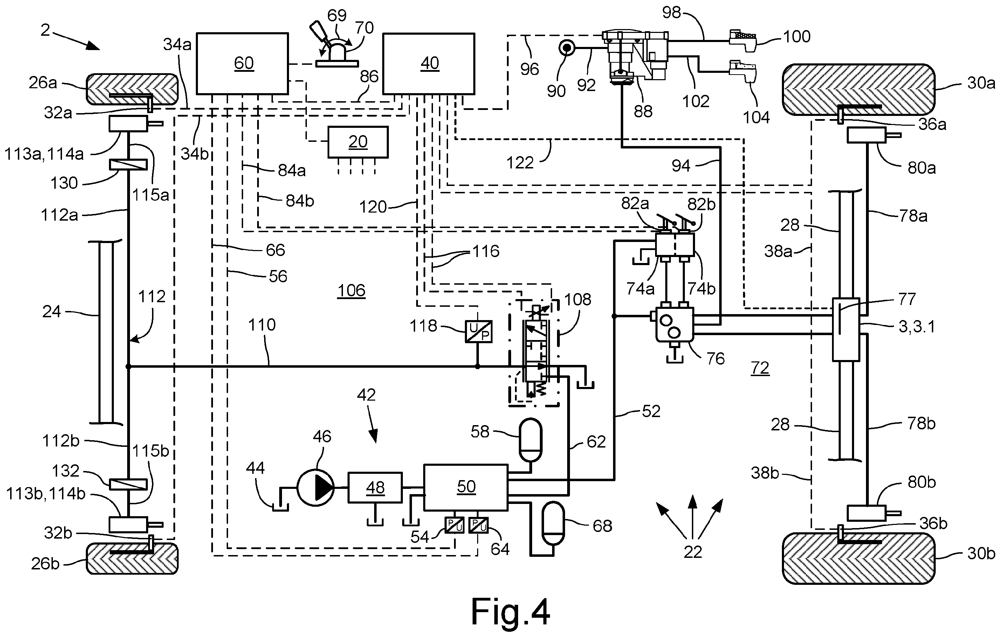

Die genannten Fahrtrichtungswechsel können schon während der Fahrt durch eine entsprechende Betätigung 69 eines manuellen Bedienungselementes70 (siehe Fig. 4), also etwa ein Fahrtrichtungshebel oder ein Fahrtrichtungsschalter, in die jeweils entgegengesetzte Fahrtrichtung ausgelöst werden. Dabei wird in dem hydrostatischen Antriebsstrang 3.1 zunächst das Fördervolumen einer nicht dargestellten Hydrostatpumpe kontinuierlich bis auf den Wert Null oder zumindest nahe Null reduziert und dann mit entgegengesetzter Förderrichtung oder mit einem ebenfalls nicht gezeigten umgeschalteten Umschaltventil wieder erhöht. Dies verursacht eine unerwünscht hohe mechanische Belastung der hier wirksamen Bauteile des hydrostatischen Antriebsstrangs 3.1.

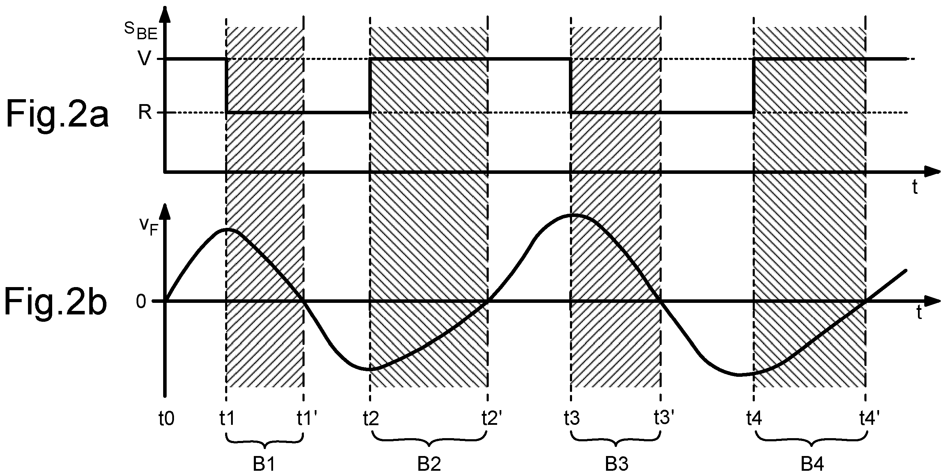

Dem wirkt das erfindungsgemäße Verfahren entgegen, indem die Verzögerung des Arbeitsfahrzeugs 2 mittels des hydrostatischen Antriebsstrangs 3.1 durch eine automatische Abbremsung mit den Bremsen 113a, 113b mindestens eines elektronisch steuerbaren Bremskreises 106 der Bremsanlage 22 unterstützt wird. Dabei werden die betreffenden Radbremsen 113a, 113b mit der Umschaltung 69 des manuellen Bedienungselementes 70 entgegen der aktuellen Vorwärts-Fahrtrichtung 15, V oder Rückwärts-Fahrtrichtung 17, R betätigt und spätestens mit Erreichen des Fahrzeugstillstands (v_{F} = 0) wieder gelöst. Dies ist in den beiden Diagrammen der Figuren 2a und 2b für das in Fig. 1 dargestellte Fahrszenario veranschaulicht. In dem ersten Diagramm gemäß Fig. 2a ist mit der durchgezogenen Linie der Schaltzustand S_{BE} des manuellen Bedienungselementes 70 zwischen Vorwärtsfahrt V und Rückwärtsfahrt R über der Zeit t aufgetragen, während das Diagramm gemäß Fig. 2b die Fahrgeschwindigkeit v_{F} des Arbeitsfahrzeugs 2 bei Vorwärtsfahrt und Rückwärtsfahrt über der Zeit t dargestellt.

Wie die beiden Figuren 2a und 2b in einer Zusammenschau verdeutlichen, beginnt der Fahrbetrieb an der Ausgangsposition A gemäß Fig. 1 zum Zeitpunkt t0 mit einer Beschleunigung des Arbeitsfahrzeugs 2 in der Vorwärtsfahrt, wobei sich das erwähnte manuelle Bedienungselement 70 zunächst in der Schaltstellung S_{BE} = V für Vorwärtsfahrt befindet.

Zum Zeitpunkt t1 schaltet der Fahrer des Arbeitsfahrzeugs 2 das manuelle Bedienungselement 70 in die Schaltstellung S_{BE} = R für Rückwärtsfahrt um. Danach wird das Arbeitsfahrzeug 2 in einer ersten Bremsphase B1 einerseits mittels der Umsteuerung des hydrostatischen Fahrantriebs 3 und zusätzlich mittels einer Betätigung der Bremsen 113a, 113b des genannten elektronisch steuerbaren Bremskreises 106 der Bremsanlage 22 abgebremst. Spätestens mit dem Erreichen des Fahrzeugstillstands (v_{F} = 0) zum Zeitpunkt t1', welcher idealerweise mit dem Erreichen der Ladeposition B zusammenfällt, werden die Bremsen 113a, 113b des elektronisch steuerbaren Bremskreises 106 wieder gelöst.

Danach wird das Arbeitsfahrzeug 2 rückwärts beschleunigt, wie dies der Verlauf der Kurve v_{F}(t) zeigt. Zum Zeitpunkt t2 schaltet der Fahrer das manuelle Bedienungselement 70 in die Schaltstellung S_{BE} = V für Vorwärtsfahrt um. Danach wird das Arbeitsfahrzeug 2 in einer zweiten Bremsphase B2 mittels der Umsteuerung des hydrostatischen Antriebsstrangs 3.1 und zusätzlich mittels einer Betätigung der Bremsen 113a, 113b des elektronisch steuerbaren Bremskreises 106 abgebremst. Spätestens mit dem Erreichen des Fahrzeugstillstands (v_{F} = 0) zum Zeitpunkt t2', welcher mit dem Erreichen der ersten Wendeposition C zusammenfällt, werden die Bremsen 113a, 113b des elektronisch steuerbaren Bremskreises 106 wieder gelöst.

Danach wird das Arbeitsfahrzeug 2 vorwärts beschleunigt. Zum Zeitpunkt t3 schaltet der Fahrer das manuelle Bedienungselement 70 in die Schaltstellung S_{BE} = R für Rückwärtsfahrt R. Danach wird das Arbeitsfahrzeug 2 in einer dritten Bremsphase B3 mittels der Umsteuerung des hydrostatischen Antriebsstrangs 3.1 und zusätzlich mittels einer Betätigung der Bremsen 113a, 113b des elektronisch steuerbaren Bremskreises 106 abgebremst. Spätestens mit dem Erreichen des Fahrzeugstillstands (v_{F} = 0) zum Zeitpunkt t3`, der idealerweise mit dem Erreichen der Entladeposition D zusammenfällt, werden die Bremsen 113a, 113b des elektronisch steuerbaren Bremskreises 106 wieder gelöst.

Anschließend wird das Arbeitsfahrzeug 2 rückwärts beschleunigt. Zum Zeitpunkt t4 schaltet der Fahrer das manuelle Bedienungselement 70 in die Schaltstellung S_{BE} = V für Vorwärtsfahrt um. Danach wird das Arbeitsfahrzeug 2 in der vierten Bremsphase B4 mittels der Umsteuerung des hydrostatischen Antriebsstrangs 3.1 und zusätzlich mittels der Betätigung der Bremsen 113a, 113b des elektronisch steuerbaren Bremskreises 106 abgebremst. Spätestens mit dem Erreichen des Fahrzeugstillstands (v_{F} = 0) zum Zeitpunkt t4', der mit dem Erreichen der zweiten Wendeposition E zusammenfällt, werden die Bremsen 113a, 113b des elektronisch steuerbaren Bremskreises wieder gelöst.

Da es bei den beiden Wendepositionen C und E nicht auf die exakte Einhaltung der jeweiligen Position ankommt, ist die Steuerung gemäß dem erfindungsgemäßen Verfahren in den beiden Bremsphasen B2, B4 unproblematisch. Dagegen ist eine weitgehend exakte Einhaltung der Ladeposition B und der Entladeposition D erforderlich, um die Aufnahme des Ladegutes 8 an der Ladeposition B und das Abladen des Ladegutes 8 an der Entladeposition D zu ermöglichen, sowie um eine Kollision mit dem Anhängerfahrzeug 14 des Fahrzeuggespanns 10 nahe der Entladeposition D zu vermeiden. Beim Anfahren der Ladeposition B und beim Anfahren der Entladeposition D ist daher ein geübter Fahrer erforderlich, damit diese beiden Positionen B und D ohne eine Betätigung des Bremspedals und/oder des Fahrpedals durch den Fahrer weitgehend exakt erreicht werden können.

In dem Funktionsschema gemäß Fig. 3 ist die Ermittlung des in den vier erwähnten Bremsphasen B1, B2, B3, B4 gemäß Fig. 2a und Fig. 2b jeweils in die Bremszylinder des elektronischen Bremskreises 106 der Bremsanlage 22 eingesteuerten Bremsdruckes p_{B} veranschaulicht. Demnach werden die Schaltstellung S_{BE} des manuellen Bedienungselementes 70, die Fahrgeschwindigkeit v_{F} des Arbeitsfahrzeugs 2, die gewünschte Bremsverzögerung a_{F_soll} des Arbeitsfahrzeugs 2 und das Eingangsdrehmoment M_{HA_E} und/oder das Ausgangsdrehmoment M_{HA_A} des hydrostatischen Antriebsstrangs 3.1 sensorisch gemessen und einem elektronischen Steuergerät 20 zugeführt. In diesem Steuergerät 20 werden diese Sensordaten verarbeitet und mit deren Hilfe der in die Bremszylinder 114a, 114b des elektronischen Bremskreises 106 einzusteuernde Bremsdruck p_{B} bestimmt. Dieses elektronische Steuergerät 20 kann ein Bestandteil eines zentralen elektronischen Steuergerätes 60 sein, oder es ist mit diesem wie in Fig. 4 dargestellt über eine Datenleitung verbunden. Der so einzusteuernde Bremsdruck p_{B} wird dann entweder mittels eines elektronisch ansteuerbaren Proportionalventils oder mittels der elektronischen ABS-Steuereinheiten 130, 132 eingestellt.

Demnach kann gemäß Fig. 4 vorgesehen sein, dass der Bremsdruck p_{B} in den Bremszylindern 114a, 114b der beiden Bremsen 113a, 113b des elektronisch steuerbaren Bremskreises 106 mittels ABS-Steuereinheiten 130, 132 eingestellt wird. An diese ABS-Steuereinheiten 130, 132 ist eingangsseitig jeweils ein von der als Hauptbremsleitung dienenden Achsbremsleitung 110 abzweigender Abschnitt 112a, 112b der vorderen Achsbremsleitung 112 angeschlossen, und ausgangsseitig jeweils ein zu einem Bremszylinder 114a, 114b der zugeordneten Bremse 113a, 113b führender Abschnitt 115a, 115b der vorderen Achsbremsleitung 112 angeschlossen.

Als weiterer Betriebsparameter zur Bestimmung des einzusteuernden Bremsdruckes p_{B} kann der Arbeitsdruck p_{A} in einer Hochdruckleitung 77 des hydrostatischen Antriebsstrangs 3.1 sensorisch gemessen und an das Steuergerät 20 übertragen werden. Anstelle der sensorischen Messung des Ausgangsdrehmomentes M_{HA_A} kann die Übersetzung i_{HA} des hydrostatischen Antriebsstrangs 3.1 sensorisch gemessen und an das Steuergerät 20 übertragen werden, mit welcher das Ausgangsdrehmoment M_{HA_A} aus dem Eingangsdrehmoment M_{HA_E} berechnet werden kann.

In der schematischen Abbildung der Fig. 4 ist eine an sich bekannte Bremsanlage 22 eines als Traktor ausgebildeten Arbeitsfahrzeugs 2 dargestellt, bei der das erfindungsgemäße Verfahren zur Anwendung kommen kann. Das Arbeitsfahrzeug 2 weist eine nicht antreibende Vorderachse 24 mit zwei beidseitig angeordneten Vorderrädern 26a, 26b und eine als Antriebsachse ausgebildete Hinterachse 28 mit zwei beidseitig angeordneten Hinterrädern 30a, 30b auf. An den Rädern 26a, 26b, 30a, 30b beider Fahrzeugachsen 24, 26 ist jeweils ein Raddrehzahlsensor 32a, 32b, 36a, 36b angeordnet, welche über Sensorleitungen 34a, 34b, 38a, 38b an das elektronische Bremssteuergerät 40 angeschlossen sind. In dem Bremssteuergerät 40 kann aus den Sensorsignalen der Raddrehzahlsensoren 32a, 32b, 36a, 35b die Fahrgeschwindigkeit v_{F} des Arbeitsfahrzeugs 2 bestimmt werden.

Die Bremsanlage 22 weist eine hydraulische Primärbremsanlage 72, eine als den elektronisch steuerbaren Bremskreis 106 ausgebildete hydraulische Sekundärbremsanlage sowie ein pneumatisches Anhängersteuerventil 88 auf. Eine hydraulische Druckmittelquelle 42 weist eine Ölpumpe 46 auf, von welcher Hydrauliköl aus einem hydraulischen Sammelbehälter 44 über ein Relaisventil 48 in eine hydraulische Druckmittelaufbereitungseinrichtung 50 förderbar ist. In der Druckmittelaufbereitungseinrichtung 50 wird das geförderte Hydrauliköl gereinigt, gekühlt und an zwei Vorratsleitungen 52, 62 geleitet. An die beiden Vorratsleitungen 52, 62 ist jeweils ein elektrohydraulischer Drucksensor 54, 64 und jeweils ein hydraulischer Druckspeicher 58, 68 angeschlossen. Die beiden Drucksensoren 54, 64 sind über elektrische Sensorleitungen 56, 66 mit einem zentralen elektronischen Steuergerät 60 des Arbeitsfahrzeugs 2 verbunden. An dieses Steuergerät 60 ist auch ein als Fahrtrichtungshebel ausgebildetes manuell betätigbares Bedienungselement 70 angeschlossen, mittels dem die Fahrtrichtung des Arbeitsfahrzeugs 2 wählbar ist.

Die Primärbremsanlage 72 ist als Betriebsbremsanlage sowie als Lenkbremsanlage nutzbar und weist in diesem Beispiel zwei Bremskreise auf, welche jeweils einer Fahrzeugseite zugeordnet sind. Die Primärbremsanlage 72 umfasst dabei die erste Vorratsleitung 52 mit dem zugeordneten hydraulischen ersten Druckspeicher 58, zwei von dem Fahrer über jeweils ein Bremspedal mechanisch betätigbare Fußbremsventile 74a, 74b, ein Achsrelaisventil 76 sowie zwei Radbremsleitungen 78a, 78b. Die beiden Fußbremsventile 74a, 74b sind eingangsseitig an die erste Vorratsleitung 52 und ausgangsseitig an das Achsrelaisventil 76 angeschlossen. Das Achsrelaisventil 76 ist ebenfalls an die Vorratsleitung 52 angeschlossen. Die beiden Radbremsleitungen 78a, 78b sind von dem Achsrelaisventil 76 zu jeweils einem hinteren Bremszylinder 80a, 80b geführt. Die hinteren Bremszylinder 80a, 80b sind als aktiv wirksame Membran- oder Kolbenbremszylinder ausgebildet und an den an sich bekannten und hier nicht abgebildeten Radbremsen der Hinterräder 30a, 30b angeordnet.

In der Funktion als Betriebsbremsanlage sind die Bremspedale der beiden Fußbremsventile 74a, 74b mechanisch miteinander gekoppelt, sodass bei einer Betätigung eines der beiden Bremspedale beide zugeordneten hinteren Bremszylinder 80a, 80b synchron mit demselben Bremsdruck beaufschlagt werden und das Arbeitsfahrzeug 2 dadurch spurstabil abgebremst wird. In der Funktion als Lenkbremsanlage sind die Bremspedale mechanisch getrennt, sodass bei einer Betätigung eines der Bremspedale nur der zugeordnete hintere Bremszylinder 80a, 80b mit Bremsdruck beaufschlagt und dadurch ein Kurven- oder Wendemanöver des Arbeitsfahrzeugs 2 in die betreffende Richtung unterstützt wird.

Durch jeweils einen an den beiden Fußbremsventilen 74a, 74b angeordneten Stellwegsensor 82a, 82b wird der Stellweg des jeweils zugeordneten Ventilkolbens gemessen und über jeweils eine elektrische Sensorleitung 84a, 84b an das zentrale Steuergerät 60 übertragen, in dem aus dem jeweiligen Stellwegsignal ein Bremswertsignal gebildet werden kann. Das zentrale Steuergerät 60 steht über einen Datenbus 86, wie zum Beispiel einen CAN-Bus, zur Informationsübertragung mit dem Bremssteuergerät 40 in Verbindung. Das Bremssteuergerät 40 steht zudem über eine Steuerleitung 122 zur Ansteuerung des hydrostatischen Fahrantriebs 3 mit demselben in Verbindung.

Das Anhängersteuerventil 88 ist eingangsseitig über eine pneumatische Vorratsleitung 92 an eine Druckluftquelle 90 und über eine hydraulische Bremssteuerleitung 94 an das Achsrelaisventil 76 der Primärbremsanlage 72 angeschlossen. Zudem ist das Anhängersteuerventil 88 über eine elektrische Steuerleitung 96 mit dem Bremssteuergerät 40 verbunden.

Im Normalbetrieb wird der eingangsseitig anliegende pneumatische Vorratsdruck bedarfsweise reduziert durch das Anhängersteuerventil 88 durchgeleitet und ausgangsseitig über eine pneumatische Vorratsleitung 98 an einen Kupplungskopf "Vorrat" (rot) 100 des Arbeitsfahrzeugs 2 geführt. Zudem wird in dem Anhängersteuerventil 88 abhängig von dem in der hydraulischen Bremssteuerleitung 94 anliegenden Bremsdruck und/oder einem über die Steuerleitung 96 übertragenen Steuersignal ein pneumatischer Bremssteuerdruck eingestellt, welcher über eine Bremssteuerleitung 102 an einen Kupplungskopf "Bremse" (gelb) 104 des Arbeitsfahrzeugs 2 geführt wird. Bei einem angekoppelten Anhängerfahrzeug 14 wird dessen druckluftbetriebene Bremsanlage 22 mit dem an dem Kupplungskopf "Vorrat" 100 anliegenden Vorratsdruck versorgt und in Abhängigkeit des an dem Kupplungskopf "Bremse" 104 anliegenden Bremssteuerdruck gesteuert.

Die Sekundärbremsanlage, also der elektronische Bremskreis 106, ist zumindest als Hilfsbremsanlage nutzbar, in deren Funktion das Arbeitsfahrzeug 2 bei einem Ausfall der Primärbremsanlage 72 sicher abgebremst werden kann. Die Sekundärbremsanlage weist nur einen elektronisch steuerbaren Bremskreis 106 auf und umfasst die zweite Vorratsleitung 62 mit dem zugeordneten hydraulischen zweiten Druckspeicher 68, ein Bremssteuerventil 108, eine in zwei Achsbremsleitungen 112a, 112b verzweigende, als Hauptbremsleitung dienende Achsbremsleitung 110, sowie zwei jeweils an eine der beiden abgezweigten Bremsleitungen 112a, 112b angeschlossene vordere Bremszylinder 114a, 114b. Die beiden vorderen Bremszylinder 114a, 114b sind als aktiv wirksame Membran- oder Kolbenbremszylinder ausgebildet und an den an sich bekannten und hier nicht im Detail abgebildeten Radbremsen 113a, 113b der Vorderräder 26a, 26b der Vorderachse 24 angeordnet.

Das Bremssteuerventil 108 ist als ein 3/3-Wege-Proportionalmagnetventil mit einem Druckmitteleingang, einem Druckmittelausgang und einem Arbeitsanschluss ausgebildet, mittels dem der Arbeitsanschluss kontinuierlich zwischen einer Verbindung mit dem Druckmittelausgang und dem Druckmitteleingang verstellbar ist. Der Druckmitteleingang ist über die Vorratsleitung 62 mit der hydraulischen Druckmittelquelle 42, der Druckmittelausgang mit einem drucklosen hydraulischen Sammelbehälter und der Arbeitsanschluss über die erwähnte Achsbremsleitung 110 und den davon abgezweigten Bremsleitungen 112a, 112b mit den beiden vorderen Bremszylindern 114a, 114b verbunden. Durch eine entsprechende Ansteuerung des Bremssteuerventils 108 ist der in der Achsbremsleitung 110 und den an diese angeschlossenen vorderen Bremszylindern 114a, 114b anliegende Bremsdruck p_{B} stufenlos zwischen einem dem Umgebungsdruck entsprechenden Minimaldruck sowie einem dem in der Vorratsleitung 62 anliegenden Vorratsdruck entsprechenden Maximaldruck einstellbar.

Der Elektromagnet des Bremssteuerventils 108 ist über eine elektrische Steuerleitung 116 mit dem Bremssteuergerät 40 verbunden und von diesem ansteuerbar. Der Arbeitsanschluss des Bremssteuerventils 108 ist im unbestromten Zustand mit dem Druckmittelausgang und im maximal bestromten Zustand ungedrosselt mit dem Druckmitteleingang verbunden. Zur Erfassung und Überwachung des über das Bremssteuerventil 108 in die Achsbremsleitung 110 eingesteuerten Bremsdruckes p_{B} ist an diese Achsbremsleitung 110 ein dritter elektrohydraulischer Drucksensor 118 angeschlossen, welcher über eine elektrische Sensorleitung 120 mit dem Bremssteuergerät 40 verbunden ist. Die Sekundärbremsanlage 106 ist somit rein elektronisch steuerbar. Der Bremsdruck p_{B} in der Achsbremsleitung 110 und den an diese angeschlossenen vorderen Bremszylindern 114a, 114b ist somit unabhängig von der Primärbremsanlage 72 in Abhängigkeit eines Bremswertsignals einstellbar, welches in dem Bremssteuergerät 40 aus den Sensorsignalen der Stellwegsensoren 82a, 82b oder auf andere Weise bestimmt werden kann.

Zur Anwendung des vorliegenden Verfahrens ist vorgesehen, dass die Sekundärbremsanlage beziehungsweise der elektronisch steuerbare Bremskreis 106 zur mechanischen Entlastung des hydrostatischen Antriebsstrangs 3.1 genutzt wird, indem das Bremssteuerventil 108 derart von dem Bremssteuergerät 40 angesteuert wird, dass die beiden Bremszylinder 114a, 114b an der Vorderachse 24 in den Bremsphasen B1, B2, B3, B4 gemäß Fig. 2 jeweils mit einem Bremsdruck p_{B} beaufschlagt werden, welcher zuvor in Abhängigkeit der Fahrgeschwindigkeit v_{F} des Arbeitsfahrzeugs 2 und mindestens eines die mechanische Belastung des hydrostatischen Antriebsstrangs 3.1 kennzeichnenden Betriebsparameters bestimmt wurde.

### Bezugszeichenliste (Teil der Beschreibung)

- 2: Arbeitsfahrzeug, Traktor
- 3: Hydrostatischer Fahrantrieb
- 3.1: Hydrostatischer Antriebsstrang
- 3a: Erste hintere Antriebsachse
- 3b: Zweite hintere Antriebsachse
- 4: Frontladerschaufel
- 6: Haufen
- 8: Ladegut
- 10: Fahrzeuggespann
- 12: Zugfahrzeug, Traktor, vorderes Teilfahrzeug
- 14: Anhängerfahrzeug, Anhänger, hinteres Teilfahrzeug
- 15: Erste Fahrtrichtung
- 16: Erster Fahrweg
- 17: Zweite Fahrtrichtung
- 18: Zweiter Fahrweg
- 20: Elektronisches Steuergerät
- 22: Fremdkraftbetätigte Bremsanlage
- 24: Vorderachse
- 26a, 26b: Vorderräder
- 28: Hinterachse, Antriebsachse
- 30a, 30b: Hinterräder
- 32a, 32b: Raddrehzahlsensoren
- 34a, 34b: Sensorleitungen
- 36a, 36b: Raddrehzahlsensoren
- 38a, 38b: Sensorleitungen
- 40: Bremssteuergerät, Steuergerät für Bremsen und den Fahrantrieb
- 42: Hydraulische Druckmittelquelle
- 44: Sammelbehälter
- 46: Ölpumpe
- 48: Relaisventil
- 50: Druckm ittelaufbereitungseinrichtung
- 52: Erste Vorratsleitung
- 54: Erster Drucksensor
- 56: Sensorleitung
- 58: Erster Druckspeicher
- 60: Zentrales Steuergerät
- 62: Zweite Vorratsleitung
- 64: Zweiter Drucksensor
- 66: Sensorleitung
- 68: Zweiter Druckspeicher
- 69: Umschaltung des Bedienungselementes 70
- 70: Bedienungselement, Fahrtrichtungshebel
- 72: Primärbremsanlage
- 74a, 74b: Fußbremsventile
- 76: Achsrelaisventil
- 77: Hochdruckleitung des hydrostatischen Antriebsstrangs
- 78a, 78b: Radbremsleitungen an der Hinterachse
- 80a, 80b: Zwei Bremszylinder an der Hinterachse
- 82a, 82b: Zwei Bremswertgeber oder Stellwegsensoren an den beiden Fußbremsventilen
- 84a, 84b: Sensorleitungen
- 86: Datenbus, CAN-Bus
- 88: Anhängersteuerventil
- 90: Druckluftquelle
- 92: Vorratsleitung (Druckluft)
- 94: Bremssteuerleitung (hydraulisch)
- 96: Steuerleitung
- 98: Vorratsleitung (Druckluft) zum Kupplungskopf "Vorrat" (rot)
- 100: Kupplungskopf "Vorrat" (rot)
- 102: Bremssteuerleitung
- 104: Kupplungskopf "Bremse" (gelb)
- 106: Elektronisch steuerbarer Bremskreis; Sekundärbremsanlage
- 108: Bremssteuerventil
- 110: Als Hauptbremsleitung dienende Achsbremsleitung
- 112: Von der Achsbremsleitung 110 abzweigende vordere Achsbremsleitung
- 112a: Von der vorderen Achsbremsleitung 112 abzweigender erster Abschnitt
- 112b: Von der vorderen Achsbremsleitung 112 abzweigender zweiter Abschnitt
- 113a: Erste Bremse des elektronisch steuerbaren Bremskreises 106
- 113b: Zweite Bremse des elektronisch steuerbaren Bremskreises 106
- 114a: Erster Bremszylinder des elektronisch steuerbaren Bremskreises 106
- 114b: Zweiter Bremszylinder des elektronisch steuerbaren Bremskreises 106
- 115a: Abschnitt der vorderen Achsbremsleitung 112 zwischen der ersten ABS-Steuereinheit 130 und dem ersten Bremszylinder 114a
- 115b: Abschnitt der vorderen Achsbremsleitung 112 zwischen der zweiten ABS-Steuereinheit 132 und dem zweiten Bremszylinder 114b
- 116: Steuerleitung
- 118: Dritter Drucksensor
- 120: Sensorleitung
- 122: Steuerleitung für den Fahrantrieb
- 130: Erste ABS-Steuereinheit mit Einlass- und Auslassventil
- 132: Zweite ABS-Steuereinheit mit Einlass- und Auslassventil
- a_{F_soll}: Betriebsparameter, Soll-Bremsverzögerung
- A: Ausgangsposition
- B: Ladeposition
- B1: Erste Bremsphase
- B2: Zweite Bremsphase
- B3: Dritte Bremsphase
- B4: Vierte Bremsphase
- C: Erste Wendeposition
- D: Entladeposition
- E: Zweite Wendeposition
- i_{HA}: Betriebsparameter, Übersetzung
- M_{HA_A}: Betriebsparameter, Ausgangsdrehmoment
- M_{HA_E}: Betriebsparameter, Eingangsdrehmoment
- p_{A}: Betriebsparameter, Arbeitsdruck
- p_{B}: Bremsdruck
- R: Rückwärtsfahrt
- S_{BE}: Betriebsparameter, Schaltstellung
- t: Zeit
- t0: Zeitpunkt
- t1, t1': Zeitpunkte
- t2, t2': Zeitpunkte
- t3, t3': Zeitpunkte
- t4, t4': Zeitpunkte
- v_{F}: Fahrgeschwindigkeit
- v_{F_min}: Mindestfahrgeschwindigkeit
- v_{F_min*}: Minimale Fahrgeschwindigkeit
- V: Vorwärtsfahrt

## Patentansprüche

1. Verfahren zur Steuerung eines Fahrtrichtungswechsels eines Arbeitsfahrzeugs (2) zwischen Vorwärtsfahrt und Rückwärtsfahrt oder umgekehrt, wobei das Arbeitsfahrzeug (2) einen elektronisch steuerbaren hydrostatischen Fahrantrieb (3), eine fremdkraftbetätigte Bremsanlage (22) mit mindestens einem elektronisch steuerbaren Bremskreis (106) und ein elektronisches Bremssteuergerät (40) zur Steuerung des Fahrantriebs (3) sowie des mindestens einen elektronisch steuerbaren Bremskreises (106) der Bremsanlage (22) aufweist, und bei dem während einer Fahrt in eine erste Fahrtrichtung (15) ein Fahrtrichtungswechsel in die dazu entgegengesetzte Fahrtrichtung (17) durch eine Umschaltung (69) des hydrostatischen Fahrantriebs (3) mittels eines zugeordneten manuellen Bedienungselementes (70) ausgelöst wird, wobei bei der Durchführung des Fahrtrichtungswechsels von Vorwärtsfahrt zu Rückwärtsfahrt oder umgekehrt die Verzögerung des Arbeitsfahrzeugs (2) durch eine automatische Betätigung der Bremsen (113a, 113b) des elektronisch steuerbaren Bremskreises (106) der Bremsanlage (22) unterstützt wird, wobei diese Bremsen (113a, 113b) ausgelöst durch die Umschaltung (69) des Bedienungselementes (70) betätigt und spätestens mit Erreichen des Fahrzeugstillstands (v_{F} = 0) wieder gelöst werden, **dadurch gekennzeichnet, dass** die Fahrgeschwindigkeit (v_{F}) des Arbeitsfahrzeugs (2) sowie mindestens ein die mechanische Belastung des hydrostatischen Antriebsstrangs (3.1) kennzeichnender Betriebsparameter (a_{F_soll} , i_{HA}, M_{HA_A}, M_{HA_E}, p_{A}, S_{BE}) sensorisch erfasst und deren Werte an das Bremssteuergerät (40) übertragen werden, und dass der in die Bremszylinder (114a, 114b) der Bremsen (113a, 113b) des elektronisch steuerbaren Bremskreises (106) einzusteuernde Bremsdruck (p_{B}) in dem Bremssteuergerät (40) in Abhängigkeit von der Fahrgeschwindigkeit (v_{F}) des Arbeitsfahrzeugs (2) sowie dem Wert des mindestens einen die mechanische Belastung des hydrostatischen Antriebsstrangs (3.1) kennzeichnenden Betriebsparameters (a_{F_soll} , i_{HA}, M_{HA_A}, M_{HA_E}, p_{A}, S_{BE} ) bestimmt wird.

2. Verfahren nach Anspruch 1, **dadurch gekennzeichnet, dass** die Bremsen (113a, 113b) des elektronisch steuerbaren Bremskreises (106) nur dann betätigt werden, wenn die Fahrgeschwindigkeit (v_{F}) des Arbeitsfahrzeugs (2) zum Zeitpunkt der Umschaltung (69) des Bedienungselementes (70) eine vorab festgelegte Mindestfahrgeschwindigkeit (v_{F_min}) erreicht hat oder überschreitet (| v_{F} | ≥ v_{F_min}).

3. Verfahren nach einem der Ansprüche 1 bis 2, **dadurch gekennzeichnet, dass** die Bremsen (113a, 113b) des elektronisch steuerbaren Bremskreises (106) schon vor Erreichen des Fahrzeugstillstands (v_{F} = 0) gelöst werden, wenn die Fahrgeschwindigkeit (v_{F}) des Arbeitsfahrzeugs (2) eine minimale Fahrgeschwindigkeit (v_{F_min*}) nahe Null erreicht oder unterschritten hat (| v_{F} | ≤ v_{F_min*}).

4. Verfahren nach einem der Ansprüche 1 bis 3, **dadurch gekennzeichnet, dass** die Bremsen (113a, 113b) des elektronisch steuerbaren Bremskreises (106) gelöst werden, sobald die Betätigung eines Fußbremsventils (74a, 74b) registriert wird, wobei der in die betreffenden Bremszylinder (114a, 114b) bereits eingesteuerte Bremsdruck (p_{B}) in einem stetigen Verlauf in den über das Fußbremsventil (74a, 74b) eingesteuerten oder mittels eines am Fußbremsventil (74a, 74b) angeordneten Bremswertgebers oder Stellwegsensors (82a, 82b) bestimmten Bremsdruck überführt wird.

5. Verfahren nach einem der Ansprüche 1 bis 4, **dadurch gekennzeichnet, dass** die Höhe des in die Bremszylinder (114a, 114b) des elektronisch steuerbaren Bremskreises (106) eingesteuerten Bremsdruckes (p_{B}) proportional zu der zum Zeitpunkt der Umschaltung (69) des Bedienungselementes (70) vorliegenden Fahrgeschwindigkeit (v_{F}) des Arbeitsfahrzeugs (2) bestimmt wird.

6. Verfahren nach einem der Ansprüche 1 bis 5, **dadurch gekennzeichnet, dass** die Höhe des in die Bremszylinder (114a, 114b) des elektronisch steuerbaren Bremskreises (106) eingesteuerten Bremsdruckes (p_{B}) proportional zu dem zum Zeitpunkt der Umschaltung (69) des Bedienungselementes (70) vorliegenden Eingangsdrehmoment (M_{HA_E}), dem Arbeitsdruck (p_{A}) in einer Hochdruckleitung (77) und dem Ausgangsdrehmoment (M_{HA_A}) oder der Übersetzung (i_{HA}) des hydrostatischen Antriebsstrangs (3.1) bestimmt wird.

7. Verfahren nach Anspruch 5 oder 6, **dadurch gekennzeichnet, dass** der nach der Umschaltung (69) des Bedienungselementes (70) in die Bremszylinder (114a, 114b) des elektronisch steuerbaren Bremskreises (106) eingesteuerte Bremsdruck (p_{B}) bis zum Lösen der Bremsen (113a, 113b) konstant gehalten wird.

8. Verfahren nach Anspruch 5 oder 6, **dadurch gekennzeichnet, dass** der nach der Umschaltung (69) des Bedienungselementes (70) in die Bremszylinder (114a, 114b) der Bremsen (113a, 113b) des elektronisch steuerbaren Bremskreises (106) eingesteuerte Bremsdruck (p_{B}) bis zum Lösen der Bremsen (113a, 113b) kontinuierlich abgesenkt wird.

9. Verfahren nach Anspruch 5 oder 6, **dadurch gekennzeichnet, dass** der nach der Umschaltung (69) des Bedienungselementes (70) in die Bremszylinder (114a, 114b) des elektronisch steuerbaren Bremskreises (106) eingesteuerte Bremsdruck (p_{B}) derart geregelt wird, dass eine vorgegebene Bremsverzögerung (a_{F_soll}) eingehalten wird.

10. Verfahren nach einem der Ansprüche 1 bis 9, **dadurch gekennzeichnet, dass** der Bremsdruck (p_{B}) in den Bremszylindern (114a, 114b) des elektronisch steuerbaren Bremskreises (106) mittels eines elektronisch ansteuerbaren Proportionalventils (108) eingestellt wird, an welches eingangsseitig eine druckführende Vorratsleitung (62) sowie ausgangsseitig eine zu den Bremszylindern (114a, 114b)führende Hauptbremsleitung (110) angeschlossen ist.

11. Verfahren nach einem der Ansprüche 1 bis 9, **dadurch gekennzeichnet, dass** der Bremsdruck (p_{B}) in den Bremszylindern (114a, 114b) der Bremsen (113a, 113b) des elektronisch steuerbaren Bremskreises (106) mittels ABS-Steuereinheiten (130, 132) eingestellt wird, an welche eingangsseitig jeweils ein von einer Achsbremsleitung (110) abzweigender Abschnitt (112a, 112b) einer vorderen Achsbremsleitung (112) und ausgangsseitig jeweils ein zu einem Bremszylinder (114a, 114b) der zugeordneten Bremse (113a, 113b) führender Abschnitt (115a, 115b) der vorderen Achsbremsleitung (112) angeschlossen sind.

12. Verfahren nach einem der Ansprüche 1 bis 11, **dadurch gekennzeichnet, dass** bei einem aus einem Zugfahrzeug (12) und einem Anhängerfahrzeug (14) bestehenden Fahrzeuggespann (10) nur die Bremsen (113a, 113b) mindestens eines elektronisch steuerbaren Bremskreises (106) der Bremsanlage (22) des in Fahrtrichtung hinteren Teilfahrzeugs (14) betätigt werden.

13. Verfahren nach einem der Ansprüche 1 bis 11, **dadurch gekennzeichnet, dass** bei einem aus einem Zugfahrzeug (12) und einem Anhängerfahrzeug (14) bestehenden Fahrzeuggespann (10) die Bremsen (113a, 113b) mindestens eines elektronisch steuerbaren Bremskreises der Bremsanlage (22) des in Fahrtrichtung hinteren Teilfahrzeugs stärker betätigt werden als die Bremsen (113a, 113b) mindestens eines elektronisch steuerbaren Bremskreises (106) des in Fahrtrichtung vorderen Teilfahrzeugs (12).

14. Verfahren nach einem der Ansprüche 1 bis 13, **dadurch gekennzeichnet, dass** nach der Betätigung (69) des manuellen Bedienungselementes (70) zur Unterstützung der Verzögerung des Arbeitsfahrzeugs (2) oder des Zugfahrzeugs (12) oder des Anhängerfahrzeugs (14) die Bremsen (113a, 113b) an der Vorderachse (24) oder an der Hinterachse (28) und/oder an der Vorderachse (24) und an der Hinterachse (28) dieses Fahrzeugs (2, 12, 14) elektronisch gesteuert betätigt werden.

## Claims

1. A method for controlling a change in the direction of travel of a working vehicle (2) between forward travel and rearward travel or vice versa, wherein the working vehicle (2) has an electronically controllable hydrostatic travel drive (3), a power-operated brake system (22) with at least one electronically controllable brake circuit (106), and an electronic brake control unit (40) for controlling the travel drive (3) and the at least one electronically controllable brake circuit (106) of the brake system (22), and in which, during travel in a first direction of travel (15), a change in the direction of travel in the opposite direction of travel (17) is triggered by switching (69) the hydrostatic travel drive (3) by means of an assigned manual operating element (70), wherein, when performing the change in the direction of travel from forward travel to rearward travel or vice versa, decelerating of the working vehicle (2) is supported by automatically actuating the brakes (113a, 113b) of the electronically controllable brake circuit (106) of the brake system (22), wherein these brakes (113a, 113b) are actuated by being triggered by switching (69) the operating element (70) and are re-released when standstill of the vehicle (v F =0) is reached at the latest, **characterised in that** the speed of travel (vF) of the working vehicle (2) and at least one operating parameter (aF_soll, iHA, M_{HA_A}, M_{HA_E}, pA, SBE) characterising the mechanical load of the hydrostatic drive train (3.1) are sensor-recorded and their values are being transmitted to the brake control unit (40), and **in that** the brake pressure (pB) that is to be set for the brake cylinders (114a, 114b) of the brakes (113a, 113b) of the electronically controllable brake circuit (106) is determined in the brake control unit (40) depending on the speed of travel (vF) of the working vehicle (2) and the value of the at least one operating parameter (aF_soll, iHA, M_{HA_A}, M_{HA_E}, pA, SBE) characterising the mechanical load of the hydrostatic drive train (3.1).

2. The method according to claim 1, **characterised in that** the brakes (113a, 113b) of the electronically controllable brake circuit (106) are only actuated if the speed of travel (v_{F}) of the working vehicle (2) at the time of switching (69) the operating element (70) has reached or exceeds (| v_{F} | > v_{F_min}) a predefined minimum speed of travel (v_{F_min}).

3. The method according to any one of claims 1 to 2, **characterised in that** the brakes (113a, 113b) of the electronically controllable brake circuit (106) are released already before reaching standstill of the vehicle (v_{F} = 0) if the speed of travel (v_{F}) of the working vehicle (2) has reached or fallen below (| v_{F} | <v_{F_min*}) a minimum speed of travel (v_{F_min*}) near zero.

4. The method according to any one of claims 1 to 3, **characterised in that** the brakes (113a, 113b) of the electronically controllable brake circuit (106) are released as soon as actuation of a foot brake valve (74a, 74b) is detected, wherein the brake pressure (p_{B}) already set for the brake cylinder (114a, 114b) in question is translated, in a constant progression, into the brake pressure that is set via the foot brake valve (74a, 74b) or is determined by means of a braking value generator or an actuator travel sensor (82a, 82b) arranged on the foot brake valve (74a, 74b).

5. The method according to any one of claims 1 to 4, **characterised in that** the level of the brake pressure (p_{B}) set for the brake cylinders (114a, 114b) of the electronically controllable brake circuit (106) is determined in proportion to the speed of travel (v_{F}) of the working vehicle (2) present at the time of switching (69) the operating element (70).

6. The method according to any one of claims 1 to 5, **characterised in that** the level of the brake pressure (p_{B}) set for the brake cylinders (114a, 114b) of the electronically controllable brake circuit (106) is determined in proportion to the input torque (M_{HA_E}), the working pressure (p_{A}) in a highpressure line (77), and the output torque (M_{HA_A}) or the transmission (i_{HA}) of the hydrostatic drive train (3.1) at the time of switching (69) the operating element (70).

7. The method according to claim 5 or 6, **characterised in that** the brake pressure (p_{B}) set for the brake cylinders (114a, 114b) of the electronically controllable brake circuit (106) after switching (69) the operating element (70) is kept constant until the brakes (113a, 113b) are released.

8. The method according to claim 5 or 6, **characterised in that** the brake pressure (p_{B}) set for the brake cylinders (114a, 114b) of the brakes (113a, 113b) of the electronically controllable brake circuit (106) after switching (69) the operating element (70) is continuously lowered until the brakes (113a, 113b) are released.

9. The method according to claim 5 or 6, **characterised in that** the brake pressure (p_{B}) set for the brake cylinders (114a, 114b) of the electronically controllable brake circuit (106) after switching (69) the operating element (70) is controlled such that a predetermined braking deceleration (a_{F_soll}) is complied with.

10. The method according to any one the claims 1 to 9, **characterised in that** the brake pressure (p_{B}) in the brake cylinders (114a, 114b) of the electronically controllable brake circuit (106) is set by means of an electronically drivable proportional valve (108) to which, on the input side, a pressure-containing supply line (62) and, on the output side, a main brake line (110) leading to the brake cylinders (114a, 114b) are connected.

11. The method according to any one of the claims 1 to 9, **characterised in that** the brake pressure (p_{B}) in the brake cylinders (114a, 114b) of the brakes (113a, 113b) of the electronically controllable brake circuit (106) is set by means of ABS control units (130, 132), to each of which, on the input side, a portion (112a, 112b) of a front axle brake line (112) branching off an axle brake line (110), and, on the output side, a portion (115a, 115b) of the front axle brake line (112) leading to a brake cylinder (114a, 114b) of the associated brake (113a, 113b) are connected.

12. The method according to any of the claims 1 to 11, **characterised in that** in a vehicle combination (10) consisting of a towing vehicle (12) and a trailer vehicle (14), only the brakes (113a, 113b) of at least one electronically controllable brake circuit (106) of the brake system (22) of the in the direction of travel rear partial vehicle (14) are actuated.

13. The method according to any one of the claims 1 to 11, **characterised in that** in a vehicle combination (10) consisting of a towing vehicle (12) and a trailer vehicle (14) the brakes (113a, 113b) of at least one electronically controllable brake circuit of the brake system (22) of the in the direction of travel rear partial vehicle are actuated more strongly than the brakes (113a, 113b) of at least one electronically controllable brake circuit (106) of the in the direction of travel front partial vehicle (12).

14. The method according to any one of claims 1 to 13, **characterised in that**, after actuating (69) the manual operating element (70) to support decelerating the working vehicle (2) or the towing vehicle (12) or the trailer vehicle (14), the brakes (113a, 113b) on the front axle (24) or on the rear axle (28) and/or on the front axle (24) and on the rear axle (28) of this vehicle (2, 12, 14) are actuated electronically controlled.

## Revendications

1. Procédé pour commander un changement de sens de marche d'un véhicule de travail (2) entre la marche avant et la marche arrière ou inversement, le véhicule de travail (2) comportant un entraînement hydrostatique (3) à commande électronique, un système de freinage actionné par une force externe (22) avec au moins un circuit de freinage à commande électronique (106) et un appareil de commande de freinage électronique (40) pour commander le système d'entraînement (3) ainsi que l'au moins un circuit de freinage (106) à commande électronique du système de freinage (22), et dans lequel, pendant un déplacement dans un premier sens de déplacement (15), un changement de sens de déplacement dans le sens de déplacement opposé (17) est déclenché par une commutation (69) de l'entraînement hydrostatique (3) au moyen d'un élément de commande manuel associé (70), le ralentissement du véhicule de travail (2) étant assisté, lors de l'exécution du changement de sens de marche de la marche avant à la marche arrière ou inversement, par un actionnement automatique des freins (113a, 113b) du circuit de freinage à commande électronique (106) du système de freinage (22), lesdits freins (113a, 113b) étant actionnés par la commutation (69) de l'élément de commande (70) et étant relâchés au plus tard lorsque le véhicule est à l'arrêt (v_{F}=0), **caractérisé en ce que** la vitesse de déplacement (v_{F}) du véhicule de travail (2) ainsi qu'au moins un paramètre de fonctionnement (a_{F_soll}, i_{HA}, M_{HA_A}, M_{HA_E}, P_{A}, S_{BE}) caractérisant la charge mécanique de la chaîne cinématique hydrostatique (3.1) sont détectés par des capteurs et leurs valeurs sont transmises à l'appareil de commande de freinage (40), et que la pression de freinage (p_{B}) à injecter dans les cylindres de frein (114a, 114b) des freins (113a, 113b) du circuit de freinage à commande électronique (106) est déterminée dans l'appareil de commande de freinage (40) en fonction de la vitesse de déplacement (v_{F}) du véhicule de travail (2) ainsi que de la valeur d'au moins un paramètre de fonctionnement (a_{F_soll}, i_{HA}, M_{HA_A}, M_{HA_E}, P_{A}, S_{BE}) caractérisant la charge mécanique de la chaîne cinématique hydrostatique (3.1).

2. Procédé selon la revendication 1, **caractérisé en ce que** les freins (113a, 113b) du circuit de freinage à commande électronique (106) ne sont actionnés que lorsque la vitesse de déplacement (v_{F}) du véhicule de travail (2) a atteint ou dépassé une vitesse de déplacement minimale prédéfinie (V_{F_min}) au moment de la commutation (69) de l'élément de commande (70) (|v_{F}|≥v_{F_min}).

3. Procédé selon l'une quelconque des revendications 1 à 2, **caractérisé en ce que** les freins (113a, 113b) du circuit de freinage à commande électronique (106) sont desserrés avant même que le véhicule ne soit à l'arrêt (v_{F}=0) lorsque la vitesse de déplacement (v_{F}) du véhicule de travail (2) a atteint ou dépassé une vitesse de déplacement minimale (V_{F_min*}) proche de zéro (|vF|≤V_{F_min*}).

4. Procédé selon l'une quelconque des revendications 1 à 3, **caractérisé en ce que** les freins (113a, 113b) du circuit de freinage à commande électronique (106) sont desserrés dès que l'actionnement d'une pédale de frein (74a, 74b) est enregistrée, la pression de freinage (p_{B}) déjà appliquée dans les cylindres de frein concernés (114a, 114b) étant transférée de manière continue en pression de freinage appliquée par la pédale de frein (74a, 74b) ou déterminée au moyen d'un transmetteur de valeur de freinage ou d'un capteur de course (82a, 82b) disposé sur la pédale de frein (74a, 74b).

5. Procédé selon l'une quelconque des revendications 1 à 4, **caractérisé en ce que** le niveau de la pression de freinage (p_{B}) appliquée dans les cylindres de frein (114a, 114b) du circuit de freinage à commande électronique (106) est déterminée proportionnellement à la vitesse de déplacement (v_{F}) du véhicule de travail (2) au moment de la commutation (69) de l'élément de commande (70).

6. Procédé selon l'une quelconque des revendications 1 à 5, **caractérisé en ce que** le niveau de la pression de freinage (p_{B}) appliquée aux cylindres de frein (114a, 114b) du circuit de freinage à commande électronique (106) est proportionnel au couple d'entrée (M_{HA_E}) présent au moment de la commutation (69) de l'élément de commande (70), à la pression de service (p_{A}) dans une conduite haute pression (77) et au couple de sortie (M_{HA_A}) ou au rapport de transmission (i_{HA}) de la transmission hydrostatique (3.1)

7. Procédé selon la revendication 5 ou 6, **caractérisé en ce que** la pression de freinage (p_{B}) introduite dans les cylindres de frein (114a, 114b) des freins (113a, 113b) du circuit de freinage à commande électronique (106) après la commutation (69) de l'élément de commande (70) est réduite en continu jusqu'à ce que les freins (113a, 113b) soient desserrés.

8. Procédé selon la revendication 5 ou 6, **caractérisé en ce que** la pression de freinage (p_{B}) introduite dans les cylindres de frein (114a, 114b) des freins (113a, 113b) du circuit de freinage à commande électronique (106) après la commutation (69) de l'élément de commande (70) est réduite en continu jusqu'à ce que les freins (113a, 113b) soient desserrés.

9. Procédé selon la revendication 5 ou 6, **caractérisé en ce que** la pression de freinage (p_{B}) introduite dans les cylindres de frein (114a, 114b) du circuit de freinage à commande électronique (106) après la commutation (69) de l'élément de commande (70) est régulée de telle manière qu'une décélération de freinage prédéterminée (a_{F_soll}) soit maintenue.

10. Procédé selon l'une quelconque des revendications 1 à 9, **caractérisé en ce que** la pression de freinage (p_{B}) dans les cylindres de frein (114a, 114b) du circuit de freinage à commande électronique (106) est réglée au moyen d'une vanne proportionnelle à commande électronique (108), à laquelle est raccordée du côté entrée une conduite d'alimentation sous pression (62) et du côté sortie une conduite de frein principale (110) menant aux cylindres de frein (114a, 114b).

11. Procédé selon l'une quelconque des revendications 1 à 9, **caractérisé en ce que** la pression de freinage (p_{B}) dans les cylindres de frein (114a, 114b) des freins (113a, 113b) du circuit de freinage à commande électronique (106) est réglée au moyen d'unités de commande ABS (130, 132), auxquelles sont raccordées, du côté entrée, une section (112a, 112b) d'une conduite de frein d'essieu avant (112) partant d'une conduite de frein d'essieu (110) et, du côté sortie, une section (115a, 115b) de la conduite de frein d'essieu avant (112) menant à un cylindre de frein (114a, 114b) du frein associé (113a, 113b).

12. Procédé selon l'une des revendications 1 à 11, **caractérisé en ce que** dans un ensemble de véhicules (10) constitué d'un véhicule tracteur (12) et d'un véhicule remorque (14), seuls les freins (113a, 1136) d'au moins un circuit de freinage (106) à commande électronique du système de freinage (22) du véhicule secondaire arrière (14) dans le sens de marche sont actionnés.

13. Procédé selon l'une quelconque des revendications 1 à 11, **caractérisé en ce que** dans un ensemble de véhicules (10) constitué d'un véhicule tracteur (12) et d'un véhicule remorque (14), les freins (113a, 113b) d'au moins un circuit de freinage à commande électronique du système de freinage (22) de la partie arrière du véhicule dans le sens de marche sont actionnés plus fortement que les freins (113a, 113b) d'au moins un circuit de freinage à commande électronique (106) de la partie avant du véhicule (12) dans le sens de marche.

14. Procédé selon l'une quelconque des revendications 1 à 13, **caractérisé en ce qu'**après la commutation (69) de l'élément de commande manuel (70) pour assister la décélération du véhicule de travail (2) ou du véhicule tracteur (12) ou du véhicule remorque (14), les freins (113a, 113b) sur l'essieu avant (24) ou sur l'essieu arrière (28) et/ou sur l'essieu avant (24) et sur l'essieu arrière (28) de ce véhicule (2, 12, 14) sont actionnés de manière commandée électroniquement.
